# EUROPÄISCHE PATENTSCHRIFT

(11) **EP 1 336 789 B1**
(45) Veröffentlichungstag und Bekanntmachung des Hinweises auf die Patenterteilung: **30.06.2004**
(21) Anmeldenummer: 02003703.2
(22) Anmeldetag: 19.02.2002
(51) Int. Cl.: F16K 47/10

(54) **Drosselventil**
Throttle valve
Soupape d'étranglement

(43) Veröffentlichungstag der Anmeldung: 20.08.2003
(73) Patentinhaber: FESTO AG & Co, 73734 Esslingen (DE)
(72) Erfinder: Rogalski, Markus, 70794 Filderstadt (DE); Wirtl, Hannes, 86956 Schongau (DE); Frisch, Herbert, 73035 Göppingen (DE)
(74) Vertreter: Abel, Martin, Dipl.-Ing.

(56) Entgegenhaltungen:
- EP-A- 0 842 839
- DE-A- 2 140 191
- DE-A- 19 807 503
- DE-B- 1 175 181

## Beschreibung

Die Erfindung betrifft ein Drosselventil, mit dem unterschiedliche Drosselungsquerschnitte eingestellt werden können, um eine variable Vorgabe des Volumenstromes eines Fluides, insbesondere Druckluft, zu ermöglichen.

In fast allen pneumatischen Steuerungen werden, auch als Stromventile bezeichnete, Drosselventile eingesetzt, um den Volumenstrom beeinflussen zu können. Durch die Veränderung des Volumenstromes kann beispielsweise die Verfahrgeschwindigkeit pneumatischer Antriebe verändert werden.

Gängige Drosselventile, wie sie beispielsweise in dem Fachbuch "Einführung in die Pneumatik", Meixner/Kobler, Seite 132, beschrieben werden, verfügen über ein Drehbetätigungsglied, das mit einem kegeligen Drosselkörper ausgestattet ist, der in Abhängigkeit von der eingestellten Drehposition mehr oder weniger weit in eine Öffnung eintaucht, so dass dem hindurchströmenden Fluid unterschiedlich große Strömungsquerschnitte zur Verfügung gestellt werden können.

Ein Nachteil dieser bekannten Drosselventile besteht in der stark eingeschränkten Reproduzierbarkeit der gewünschten Einstellungen bei einem angestrebten großen Einstellbereich. Um diesen Einstellbereich abzudecken, bedarf es einer größeren Anzahl von Umdrehungen des Drehbetätigungsgliedes, was es überaus schwierig macht, eine einmal aufgefundene Einstellung nach einem beispielsweise defektbedingten Austausch des Drosselventils wieder aufzufinden.

Man hat daher in der DE-GM 68 096 70, in der DE-OS 2 140 191, in der DE-AS 1 175 181 und in der älteren deutschen Patentanmeldung 100 49 091.3 bereits vorgeschlagen, anstelle eines sich beim Einstellvorgang rotativ und axial bewegbaren Drosselkörpers ein lediglich verdrehbares, axial jedoch feststehendes Stellglied vorzusehen, mit dem sich eine Auswahl aus Drosselungsdurchgängen unterschiedlicher Querschnitte treffen lässt. So ist beispielsweise in der DE-GM 68 096 70 ein scheibenartiges Stellglied vorgesehen, das über mehrere Drosseldurchgänge mit unterschiedlichen Querschnitten verfügt, die sich alternativ im Fluidstrom plazieren lassen. Ein Vorteil solcher Drosselventile besteht darin, dass die die Drosselungsquerschnitte vorgebenden Bohrungen sehr exakt hergestellt werden können. Ihr Nachteil besteht jedoch darin, dass eine große Anzahl unterschiedlicher Drosseldurchgänge bereitgestellt werden muss, um eine einigermaßen variable Einstellung der Drosselungsintensität zu ermöglichen. Dies geht jedoch zu Lasten der Baugröße.

In der DE-OS 25 31 617 wurde bereits vorgeschlagen, zur Vorgabe unterschiedlicher Drosselungsquerschnitte auf eine kreisbogenförmig gestaltete Drosselnut zurückzugreifen, die mit mehreren durch Kammern voneinander getrennte Lochblenden ausgestattet ist. Auch dadurch wird die geschilderte Problematik jedoch nicht behoben.

Es ist die Aufgabe der vorliegenden Erfindung, ein Drosselventil zu schaffen, das trotz kompakter Abmessungen innerhalb eines großen Arbeitsbereiches feinfühlige und möglichst leicht reproduzierbare Einstellungen unterschiedlicher Drosselungsintensitäten gestattet.

Gelöst wird diese Aufgabe durch ein Drosselventil, mit einer stufenweise zwischen verschiedenen Drosselungsstufen mit unterschiedlichen Drosselungsquerschnitten umschaltbaren Grobeinstellungs-Drosseleinrichtung und mit einer der Grobeinstellungs-Drosseleinrichtung parallel geschalteten, hinsichtlich ihres Drosselungsquerschnittes stufenlos einstellbaren Feineinstellungs-Drosseleinrichtung.

Bei diesem Drosselventil kann durch eine verhältnismäßig geringe Anzahl individuell auswählbarer Drosselungsstufen der Grobeinstellungs-Drosseleinrichtung ein sehr weiter Einstellbereich zur Verfügung gestellt werden, wobei durch die parallel geschaltete Feineinstellungs-Drosseleinrichtung auch die jeweils zwischen aufeinanderfolgenden Drosselungsstufen liegenden Querschnitte erfasst werden können. Da sich die Feineinstellungsmaßnahmen immer nur auf die Querschnittsdifferenz zwischen zwei aufeinanderfolgenden Drosselungsstufen beschränken, kann der Feineinstellungsbereich relativ klein ausfallen, was eine feinfühlige Justierung begünstigt und vor allem die Reproduzierbarkeit einer getroffenen Einstellung wesentlich verbessert. Außerdem lassen sich bei Bedarf sehr kompakte Abmessungen des Drosselventils realisieren.

Aus der EP 0 842 839 B1 geht eine Dämpferventilanordnung hervor, bei der einer von außen her nicht justierbaren Drossel eine mit einer Einstellschraube ausgestattete Drossel zur Feinabstimmung parallel geschaltet ist. Ein Umschalten zwischen mehreren Drosselungsstufen ist jedoch nicht vorgesehen. Die Einstellschraube dient lediglich dazu, eine Feinabstimmung der vorhandenen, unveränderlichen Drossel vornehmen zu können.

Vorteilhafte Weiterbildungen der Erfindung gehen aus den Unteransprüchen hervor.

Zweckmäßigerweise sind die beiden Drosseleinrichtungen so ausgelegt, dass innerhalb des durch die beiden Drosseleinrichtungen zur Verfügung gestellten Gesamt-Einstellbereiches der Drosselungsintensität eine stufenlose Vorgabe jeder beliebigen Drosselungsintensität möglich ist. Bevorzugt wird insgesamt eine lineare, stufenlose Charakteristik zur Verfügung gestellt. Die Einstellung des gewünschten Drosselungswertes gestaltet sich besonders einfach, wenn der Einstellbereich der Feineinstellungs-Drosseleinrichtung genau die Querschnittsdifferenz zwischen den größenmäßig jeweils aufeinanderfolgenden Drosselungsstufen der Grobeinstellungs-Drosseleinrichtung abdeckt. Besonders vorteilhaft ist es insbesondere in diesem Zusammenhang, wenn die Feineinstellungs-Drosseleinrichtung ein Drehbetätigungsglied für die stufenlose Einstellung des Drosselungsquerschnittes aufweist, dessen Verstellbereich maximal 360° beträgt, so dass im Rahmen der Feineinstellung nicht mehr als maximal eine Umdrehung des Drehbetätigungsgliedes erforderlich ist. Bevorzugt liegt der maximal mögliche Verstellbereich des Drehbetätigungsgliedes im Bereich zwischen 270° und 340°.

Bei einer bevorzugten Ausgestaltung verfügt die Grobeinstellungs-Drosseleinrichtung zur Vorgabe der einzelnen Drosselungsstufen über eine Mehrzahl von Drosseldurchgängen mit unterschiedlichen Drosselungsquerschnitten. Diese sind mittels eines entsprechend positionierbaren Drehbetätigungsgliedes der Grobeinstellungs-Drosseleinrichtung individuell auswählbar, derart, dass das Fluid beim Durchtritt durch die Groeinstellungs-Drosseleinrichtung lediglich den jeweils ausgewählten Drosseldurchgang passiert.

Wenn das Drehbetätigungsglied der Grobeinstellungs-Drosseleinrichtung in den ausgewählten Positionen durch Verrastung positionierbar ist, wird eine besonders präzise Einstellung möglich. Auch kann sozusagen durch "Mitzählen" der Rastvorgänge eine sehr einfache Reproduktion der eingestellten Drosselstufe vorgenommen werden, wenn keine zusätzliche Skala vorgesehen ist. Eine Skala wird allerdings bevorzugt, um den Einstellvorgang besonders einfach zu gestalten.

Das Drehbetätigungsglied der Grobeinstellungs-Drosseleinrichtung definiert zweckmäßigerweise einen Überströmkanal, der durch Drehpositionierung des Drehbetätigungsgliedes so positioniert werden kann, dass er den mit einem Anschlußkanal des Drosselventils verbundenen, ausgewählten Drosseldurchgang mit einem anderen Anschlußkanal des Drosselventils verbindet.

Bei der jeweils gewählten Einstellung wird durch den Überströmkanal zweckmäßigerweise jeweils eine Verbindung zwischen einer Mündung des vorgenannten Anschlußkanals und der Mündung des jeweils ausgewählten Drosseldurchganges hergestellt. Diese Mündungen befinden sich vorzugsweise am Boden einer Überströmkammer, auf dem das Drehbetätigungsglied beim Verdrehen abgleiten kann. Um eine unerwünschte Leckage auszuschließen, wird der Boden der Überströmkammer zweckmäßigerweise von einer gelochten Drosselscheibe gebildet, die unter anderem von den Drosseldurchgängen unterschiedlichen Querschnittes durchsetzt ist. Der Aufbau der Drosselscheibe ist insbesondere zweischichtig mit einer weichelastischen Dichtungsschicht, die sich am Ventilgehäuse abstützen kann, um eine steifere, jedoch anschmiegsame Gleitschicht zuverlässig gegen das Drehbetätigungsglied vorzuspannen.

Um die jeweils gewünschte Drosselungsstufe einzustellen, verfügt die Großeinstellungs-Drosseleinrichtung zweckmäßigerweise über ein Drehbetätigungsglied. An diesem ist vorzugsweise die Feineinstellungs-Drosseleinrichtung vorgesehen. Auf diese Weise kann besonders einfach gewährleistet werden, dass die an der Feineinstellungs-Drosseleinrichtung eingestellte Drosselungsintensität bei einer Änderung der Drosselungsstufe der Grobeinstellungs-Drosseleinrichtung konstant bleibt. Dies erleichtert den Einstellvorgang.

Die Feineinstellungs-Drosseleinrichtung verfügt zweckmäßigerweise über einen im Drehbetätigungsglied der Grobeinstellungs-Drosseleinrichtung verlaufenden Drosselkanal, dem ein an diesem Drehbetätigungsglied verstellbar gelagertes Drosselglied für die Feineinstellung der Drosselungsintensität zugeordnet ist. Die Betätigung des Drosselgliedes geschieht vorzugsweise durch ein Drehbetätigungsglied der Feineinstellungs-Drosseleinrichtung, dessen Drehachse koaxial zu derjenigen des Drehbetätigungsgliedes der Grobeinstellungs-Drosseleinrichtung verläuft.

Eine besonders kompakte Anordnung ergibt sich, wenn das die Feineinstellungs-Drosseleinrichtung durchströmende Fluid durch die momentan nicht ausgewählten Drosseldurchgänge hindurchströmen kann. Es kann damit auf einen gesonderten, um die Grobeinstellungs-Drosseleinrichtung herumgeführten Kanal verzichtet werden.

Eine zweckmäßige Bauform sieht vor, dass das Drosselventil über ein Ventilgehäuse verfügt, an dem zwei von außen zugängliche Anschlußkanäle vorgesehen sind, zwischen die die beiden Drosseleinrichtungen eingeschaltet sind. Die Drosseleinrichtungen befinden sich zweckmäßigerweise in einem Grundkörper des Ventilgehäuses, der auch einen der Anschlußkanäle aufweist. Der andere Anschlußkanal ist bevorzugt an einem an dem Grundkörper drehbar gelagerten Schwenkteil des Ventilgehäuses ausgebildet, so dass es möglich ist, die Abgangsrichtung des zugeordneten Anschlußkanals den jeweiligen Gegebenheiten entsprechend auszurichten. Bevorzugt bilden diese vorerwähnten Komponenten eine sogenannte Schwenkverschraubung, wie sie als solches beispielsweise aus dem Fachbuch "Arbeitsbuch der Ölhydraulik", Panzer/Beitler, 2. Auflage, Krauskopf-Verlag, 1969, Seite 359 hervorgeht.

Schließlich kann zwischen den beiden Anschlußkanälen auch noch ein Umgehungskanal mit zugeordneten Rückschlagventilmitteln vorgesehen sein. Auf diese Weise liegt insgesamt ein einstellbares Drosselventil mit Rückschlagventil vor. Als solches sind derartige Ventilarten beispielsweise aus dem Fachbuch "Einführung in die Hydraulik und Pneumatik", 1. Auflage, VEB-Verlag Technik, Berlin, 1981, Seiten 156/157 bekannt.

Nachfolgend wird die Erfindung anhand der beiliegenden Zeichnung näher erläutert. In dieser zeigen:
- Figur 1: einen Längsschnitt durch eine bevorzugte Bauform des erfindungsgemäßen Drosselventils gemäß Schnittlinie I-I aus Figur 4,
- Figur 2: einen weiteren Längsschnitt durch das Drosselventil in einer anderen Schnittebene, die in Figur 4 durch die Schnittlinie II-II angedeutet ist,
- Figur 3: das gemäß Schnittlinie II-II geschnittene Drosselventil in perspektivischer Darstellung, allerdings unter Weglassung des vorzugsweise vorhandenen Schwenkteils des Ventilgehäuses,
- Figur 4: einen Querschnitt durch das Drosselventil gemäß Schnittlinie IV-IV aus Figur 1,
- Figur 5: eine Draufsicht auf das Drosselventil mit Blickrichtung gemäß Pfeil V aus Figuren 2 und 3, und
- Figur 6: eine schematische Darstellung des Schaltbildes des Drosselventils.

Das beispielhaft gezeigte Drosselventil 1 ist in anschlußtechnischer Hinsicht so ausgelegt, dass es in die Verbindung zwischen einem fluidtechnischen Bauteil 3 und einer Fluidleitung 4 einschaltbar ist. Bei dem fluidtechnischen Bauteil 3 handelt es sich beispielsweise um einen fluidbetätigten Antrieb oder ein Ventil. Die Fluidleitung 4 kann ein starres Rohr sein, ist aber in der Regel als flexibler Druckmittelschlauch ausgeführt. Durch das Drosselventil kann eine fluidische Verbindung zwischen dem fluidtechnischen Bauteil 3 und der Fluidleitung 4 hergestellt werden. Das Drosselventil eignet sich sowohl für pneumatische als auch für hydraulische Anwendungen.

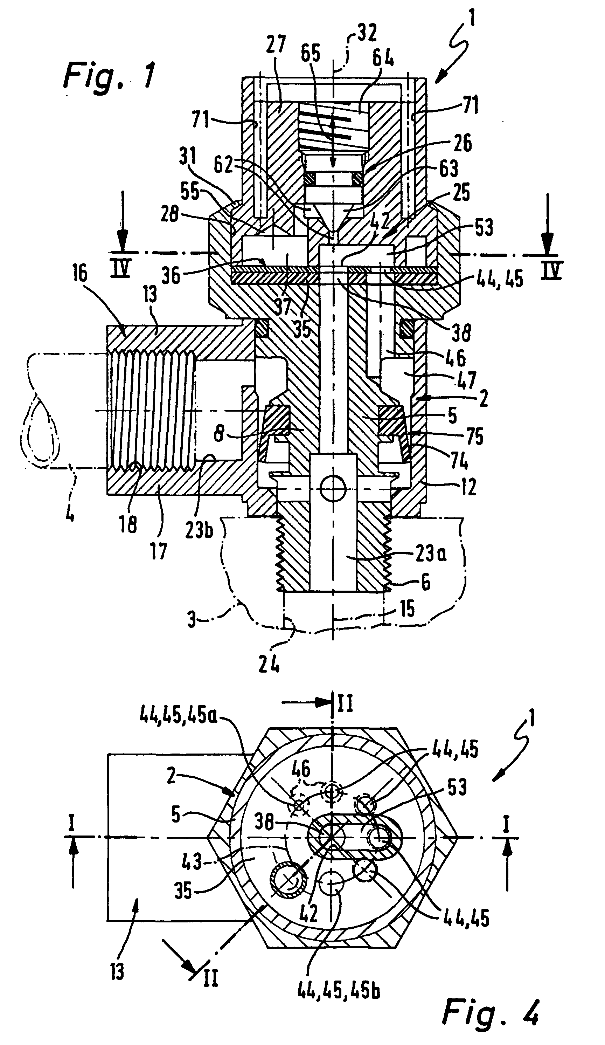

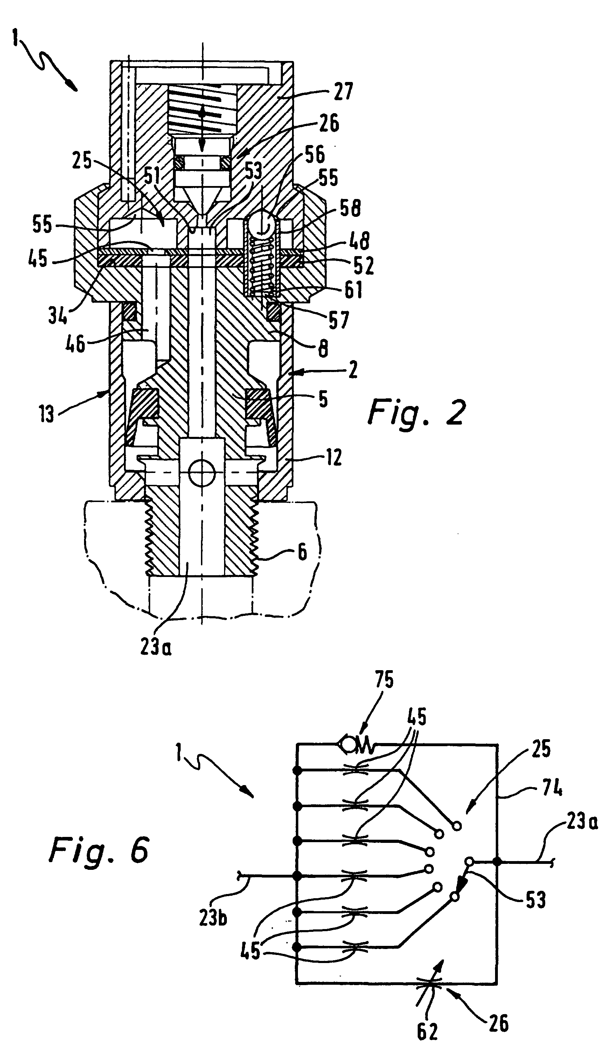

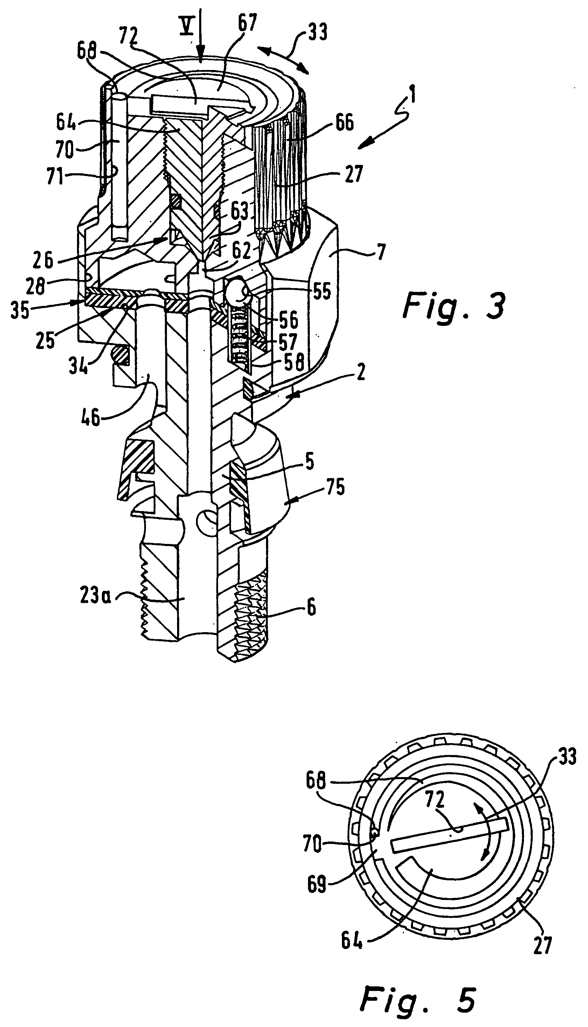

Das Drosselventil 1 verfügt über ein insgesamt mit Bezugsziffer 2 bezeichnetes Ventilgehäuse mit einem durchgehend hohl ausgebildeten länglichen Grundkörper 5, der zweckmäßigerweise nach Art einer Hohlschraube ausgeführt ist. An dem in Figuren 1 bis 3 nach unten weisenden vorderen Ende ist der Grundkörper 5 mit einem ein Außengewinde aufweisenden zylindrischen Befestigungsabschnitt 6 versehen, der in eine Gewindebohrung des fluidtechnischen Bauteils 3 eingeschraubt werden kann. Der in Figuren 1 bis 3 oben liegende kopfseitige Endabschnitt 7 des Grundkörpers 5 hat außen eine Mehrkantkontur oder ist auf andere Weise derart ausgebildet, dass sich ein Schraubwerkzeug ansetzen lässt, mit dem sich die Schraubbefestigung am fluidtechnischen Bauteil 3 unterstützen lässt.

Zwischen dem Befestigungsabschnitt 6 und dem kopfseitigen Endabschnitt 7 befindet sich ein weiterer Längenabschnitt des Grundkörpers 5, der nachfolgend als Lagerungsabschnitt 8 bezeichnet sei. Auf diesem Lagerungsabschnitt 8 sitzt koaxial ein ring- oder hülsenähnlich gestalteter Lagerkörper 12, der Bestandteil eines Schwenkteils 13 des Ventilgehäuses 2 ist, welches relativ zum Grundkörper 5 beliebig verdrehbar ist. Die Drehachse fällt mit der Längsachse 15 des Grundkörpers 5 zusammen. Beim Verdrehen des Schwenkteils 13 dreht sich der Lagerkörper 12 auf dem Lagerungsabschnitt 8 des Grundkörpers 5.

Das Schwenkteil 13 ist zum Anschließen der erwähnten Fluidleitung 4 ausgelegt. Es verfügt über Mittel, die einen Fluidleitungsanschluß 16 definieren, der quer zur Längsachse 15 des Grundkörpers 5 orientiert ist. Beim Ausführungsbeispiel ist hierzu ein radial vom Lagerkörper 12 abstehender Anschlußstutzen 17 vorgesehen, der eine Anschlußöffnung 18 definiert, in den die Fluidleitung 4 unter Abdichtung einschraubbar ist. Alternativ kann der Fluidleitungsanschluß 16 auch mit Steckverbindungsmitteln ausgestattet sein, die einen einfachen lösbaren Steckanschluß der Fluidleitung 4 gestatten.

Durch das Schwenkteil 13 ergibt sich eine Bauform des Ventilgehäuses 2 nach Art einer Schwenkverschraubung. Der Anwender hat die Möglichkeit, den Anschlußstutzen 17 winkelmäßig entlang des Umfanges des Grundkörpers 5 so zu positionieren, dass er hinsichtlich der anzuschließenden Fluidleitung 4 eine optimale Ausrichtung hat. Das Drosselventil 1 kann jedoch auch in einer Bauform ohne Schwenkteil realisiert werden. Die geschilderten Anschlußmaßnahmen und die im Folgenden noch erläuterten Merkmale des Schwenkteils 13 können dann unmittelbar am Grundkörper 5 vorgesehen sein.

Ein Längenabschnitt des den Grundkörper 5 durchziehenden Hohlraumes bildet einen ersten Anschlußkanal 23a. Dieser mündet an der Stirnseite des Befestigungsabschnittes 6 aus und kommuniziert im am fluidtechnischen Bauteil 3 montierten Zustand mit einem darin ausgebildeten Druckmittelkanal 24.

Die Anschlußöffnung 18 gehört zu einem zweiten Anschlußkanal 23b. Er kommuniziert mit der angeschlossenen Fluidleitung 4.

Unter Zwischenschaltung zweier parallel geschalteter Drosseleinrichtungen stehen die beiden Anschlußkanäle 23a, 23b im Innern des Drosselventils 1 miteinander in fluidischer Verbindung. Die eine Drosseleinrichtung ist stufenweise zwischen verschiedenen Drosselungsstufen mit unterschiedlichen Drosselungsquerschnitten umschaltbar und sei als Grobeinstellungs-Drosseleinrichtung 25 bezeichnet. Die hierzu wirkungsmäßig parallel geschaltete zweite Drosseleinrichtung ist für eine stufenlose Einstellung des von ihr zur Verfügung gestellten Drosselungsquerschnittes ausgelegt und sei als Feineinstellungs-Drosseleinrichtung 26 bezeichnet.

Die beiden Drosseleinrichtungen 25, 26 decken gemeinsam einen Gesamt-Einstellbereich ab, innerhalb dem stufenlos jede gewünschte Drosselungsintensität eingestellt werden kann. Erreicht wird dies insbesondere dadurch, dass die Querschnittsunterschiede zwischen den größenmäßig jeweils aufeinanderfolgenden Drosselungsstufen der Grobeinstellungs-Drosseleinrichtung 25 und der von der Feineinstellungs-Drosseleinrichtung 26 abgedeckte stufenlose Einstellbereich - nachfolgend "Feineinstellbereich genannt" - so aufeinander abgestimmt sind, dass mit dem Feineinstellbereich auf jeden Fall die Querschnittsdifferenzen zwischen den größenmäßig jeweils aufeinanderfolgenden Drosselungsstufen abgedeckt werden.

Bevorzugt ist die Auslegung so getroffen, dass sich die jeweils aufeinanderfolgenden Drosselungsstufen durch identische Volumenstromdifferenzen voneinander unterscheiden und dass die Drosselungscharakteristik der Feineinstellungs-Drosseleinrichtung eine lineare Charakteristik ist, so dass sich insgesamt eine kontinuierliche, lineare Einstellcharakteristik mit dem Drosselventil 1 realisieren lässt.

Die Grobeinstellungs-Drosseleinrichtung 25 verfügt über ein zweckmäßigerweise als Drehknopf ausgebildetes Drehbetätigungsglied 27, das in eine im kopfseitigen Endabschnitt 7 des Grundkörpers 5 koaxial ausgebildete Aufnahme 28 eingreift. Durch einen umgebördelten Halteabschnitt 31 des Grundkörpers 5 oder durch andere Befestigungsmaßnahmen ist das Drehbetätigungsglied 27 axial unbeweglich, zugleich jedoch verdrehbar in der Aufnahme 28 gehalten. Die Drehachse 32 des Drehbetätigungsgliedes 27 fällt mit der Längsachse 15 des Grundkörpers 5 zusammen. Die mögliche Drehbewegung ist in der Zeichnung durch den Doppelpfeil 33 angedeutet.

In der Aufnahme 28 ist koaxial zwischen dem Drehbetätigungsglied 27 und der dieser zugewandten Grundfläche 34 der Aufnahme 28 ein als Drosselscheibe 35 bezeichnetes scheibenartiges Teil plaziert. Sie verfügt zumindest partiell über gummielastische Eigenschaften und ist zwischen dem Drehbetätigungsglied 27 und dem Grundkörper 5 eingespannt. Sie bildet den Boden 36 einer Überströmkammer 37, die zwischen der Drosselscheibe 35 und dem Drehbetätigungsglied 27 definiert ist.

Der erste Anschlußkanal 23a durchzieht den Grundkörper 5 bis hin zur Drosselscheibe 35, in der er sich mit einem fluchtenden ersten Durchgangsloch 38 fortsetzt, um mit einer ersten Mündung 42 an zentraler Stelle des Bodens 36 zur Überströmkammer 37 auszumünden.

Entlang einer kreisbogenförmigen Linie 43, deren Zentrum in der ersten Mündung 42 bzw. auf der Längsachse 15 liegt, sind in gleichmäßiger Verteilung mehrere zweite Durchgangslöcher 44 der Drosselscheibe 35 angeordnet. Sie bilden Drosseldurchgänge 45 der Grobeinstellungs-Drosseleinrichtung 25, wobei sie die erwähnten Drosselungsstufen definieren, indem sie über unterschiedliche Drosselungsquerschnitte verfügen. Entlang der Lochreihe nehmen die Drosselungsquerschnitte von einem Drosseldurchgang 45a kleinsten Drosselungsquerschnittes bis zu einem Drosseldurchgang 45b größten Drosselungsquerschnittes in gleichmäßigen Querschnittsabstufungen zu.

Jeder Drosseldurchgang 45 kommuniziert einenends mit dem zweiten Anschlußkanal 23b. Hierzu ist in dem Grundkörper 5 eine der Anzahl der Drosseldurchgänge 45 entsprechende Anzahl von Verbindungskanälen 46 vorgesehen, die zweckmäßigerweise parallel zu dem ersten Anschlußkanal 23a verlaufen und um diesen herum verteilt sind. Sie führen alle zu einem Sammelraum 47, der mit dem zweiten Anschlußkanal 23b verbunden ist. Beim Ausführungsbeispiel ist der Sammelraum 47 ein koaxial zum Grundkörper 5 angeordneter Ringraum, der zwischen dem Lagerkörper 12 und dem Grundkörper 5 definiert ist und in den der zweite Anschlußkanal 23b umfangsseitig einmündet.

Die Querschnittsabmessungen der Verbindungskanäle 46 können untereinander gleich sein, wenn sie wenigstens dem Drosselungsquerschnitt des größten Drosseldurchganges 45a entsprechen. Der tatsächlich gewünschte Drosselungsquerschnitt kann dann durch die entsprechend ausgebildeten Drosseldurchgänge 45 vorgegeben werden. Man hat daher insbesondere die Möglichkeit, durch wahlweise Verwendung unterschiedlicher Drosselscheiben 35 unterschiedliche Drosselungscharakteristika oder Volumenströme zur Verfügung zu stellen.

Ferner besteht der Vorteil, die Drosseldurchgänge 45 nach Art von Lochblenden mit geringer "Kanallänge" auszubilden, was sich vorteilhaft auf die Präzision auswirkt. Beim Ausführungsbeispiel wird dies noch dadurch begünstigt, dass die Drosselscheibe 35 einen Mehrschichtaufbau besitzt, wobei die Drosseldurchgänge 45 von einer aus steifem Kunststoffmaterial bestehenden Schicht definiert wird, die nachfolgend als Drosselungsschicht 48 bezeichnet sei. Sie ist relativ dünn, so dass neben der erwähnten Drosselungspräzision auch noch der Effekt erzielt wird, dass die Drosselungsschicht 48 leicht verformbar ist, so dass sie sich optimal an die zugewandte Stirnfläche des Drehbetätigungsgliedes 27 anschmiegen kann.

Eine zweite Schicht der Drosselscheibe 35 befindet sich an der der Grundfläche 34 zugewandten Seite der Drosselungsschicht 48. Bei ihr handelt es sich um eine weichelastische, insbesondere aus gummielastischem Material bestehende Dichtungsschicht 52, die über mit den Drosseldurchgängen 45 kommunizierende Durchbrechungen verfügt und die unter Abdichtung an der Grundfläche 34 der Aufnahme 28 anliegt. Durch die Gummielastizität wird die schon erwähnte Vorspannung erzielt, welche einen optimalen Dichtkontakt zu den an der Drosselscheibe 35 anliegenden Komponenten des Drosselventils 1 gewährleistet.

Sämtliche Drosseldurchgänge 45 münden an der ihrem Verbindungskanal 46 entgegengesetzten Seite zu der Überströmkammer 37 aus.

Das Drehbetätigungsglied 27 ist an der dem Boden 36 der Überströmkammer 37 zugewandten Stirnfläche mit einer zum Boden 36 hin offenen nutartigen Vertiefung 51 versehen, wobei das Drehbetätigungsglied 27 mit dem die Öffnung der Vertiefung 51 umgebenden Rand 55 an dem Boden 36 anliegt und somit ein Überströmkanal 53 definiert wird.

Die Vertiefung 51 überdeckt ständig die erste Mündung 42, so dass der Überströmkanal 53 ständig mit dem ersten Anschlußkanal 23a in Fluidverbindung steht.

Die Vertiefung 51 erstreckt sich radial mit Bezug zur Drehachse 32, und dabei zumindest bis hin zu der auf der kreisbogenförmigen Linie 43 liegenden Lochreihe. Durch manuelles Verdrehen des Drehbetätigungsgliedes 27 lässt sich somit der Überströmkanal 53 zum Erhalt der einzelnen Drosselungsstufen so positionieren, dass er gleichzeitig jeweils mit der ersten Mündung 42 und einem der Drosseldurchgänge 45 verbunden ist. Die anderen Drosseldurchgänge 45 münden dabei jeweils außerhalb des Überströmkanals 43 in die Überströmkammer 37 ein. Beim Verdrehen des Drehbetätigungsgliedes gleitet der Rand 54 auf dem sich rechtwinkelig zur Drehachse 32 erstreckenden Boden 36 der Überströmkammer 37 entlang.

Es kann also durch entsprechende Positionierung des Drehbetätigungsgliedes 27 jeder beliebige der Drosseldurchgänge 45 für den Drosselungsvorgang ausgewählt werden. Ein beispielsweise in den ersten Anschlußkanal 23a eingespeistes Fluid strömt über das erste Durchgangsloch 38 in den Überströmkanal 53, durchströmt diesen bis zum ausgewählten Drosseldurchgang 45, tritt durch diesen ausgewählten Drosseldurchgang 45 hindurch in den sich anschließenden Verbindungskanal 46, und gelangt von dort über den Sammelraum 47 zum zweiten Anschlußkanal 23b.

Es kann allein durch reibschlüssige Maßnahmen, beispielsweise das Zusammenwirken zwischen der Drosselscheibe 35 und dem Drehbetätigungsglied 27, gewährleistet werden, dass das Drehbetätigungsglied 27 in der jeweiligen Drehposition verharrt. Von Vorteil ist es aber, wenn zusätzlich oder alternativ Verrastungsmaßnahmen getroffen sind, die eine Positionierung des Drehbetätigungsgliedes 27 in den ausgewählten Positionen durch lösbares Verrasten gestatten. Derartige Maßnahmen sind, wie nachstehend erläutert, beim Ausführungsbeispiel vorhanden.

Das Drehbetätigungsglied 27 ist an der der Grundfläche 34 der Aufnahme 28 zugewandten Stirnseite mit einer die Überströmkammer definierenden Vertiefung versehen. Am Grund dieser Vertiefung befindet sich eine auf einer Kreisbahn um die Drehachse 32 herum verteilte Anordnung von Rastvertiefungen 55. Jede Rastvertiefung 55 entspricht einer auswählbaren Position bzw. Drosselungsstufe.

Durch eine sich am Grundkörper 5 abstützende Druckfeder 57 wird ein bevorzugt kugelförmiges Rastelement 56 gegen den Grund der erwähnten Vertiefung vorgespannt, und zwar in einem radialen Abstand zur Drehachse 32, der dem Abstand dieser Drehachse 32 von den Rastvertiefungen 35 entspricht. Wird das Drehbetätigungsglied 27 verdreht, rastet das Rastelement 56 bei jeder Drosselstufe in eine der Rastvertiefungen 55 ein.

Darüberhinaus ist eine weitere verrastbare Position möglich, bei der die Grobeinstellungs-Drosseleinrichtung abgesperrt ist. Der Überströmkanal 53 ist dann so positioniert, dass er zwischen den Drosseldurchgängen 45a, 45b kleinsten und größten Querschnittes liegt, wo sich kein Drosseldurchgang 45 befindet. Das Fluid ist dadurch an einem Hindurchströmen durch die Grobeinstellungs-Drosseleinrichtung 25 gehindert.

Das Rastelement 56 ist zweckmäßigerweise in einem Führungsrohr 58 verstellbar geführt. In diesem Führungsrohr 58 erstreckt sich auch die Druckfeder 57. Das Führungsrohr 58 durchsetzt die Drosselscheibe 35 und ist in einer axialen Vertiefung 61 des Grundkörpers 5 gehalten. Dadurch wird gleichzeitig eine drehwinkelmäßige Positionierung und Lagefixierung der Drosselscheibe 35 erzielt.

Alternativ könnten auch andere Positionsvorgabemittel vorgesehen sein, die das Einsetzen der Drosselscheibe 35 in nur einer möglichen Position gestatten.

Die Feineinstellungs-Drosseleinrichtung 26 ist vorzugsweise am.Drehbetätigungsglied 27 der Grobeinstellungs-Drosseleinrichtung 25 vorgesehen, wobei sie beim Ausführungsbeispiel in dieses Drehbetätigungsglied 27 integriert ist. Sie enthält einen Drosselkanal 62, der zwischen dem Überströmkanal 53 und dem außerhalb des Überströmkanals 53 liegenden Abschnitt der Überströmkammer 37 verläuft. Da dieser letztgenannte Kammerabschnitt über die momentan nicht für einen Drosselungsvorgang ausgewählten Drosseldurchgänge 45 mit dem zweiten Anschlußkanal 23b in Verbindung steht, stellt der Drosselkanal 62 somit eine ständige Fluidverbindung zwischen den beiden Anschlußkanälen 23a, 23b her, die parallel zu derjenigen Fluidverbindung existiert, die durch die ausgewählte Drosselungsstufe von der Grobeinstellungs-Drosseleinrichtung 25 bereitgestellt wird.

Dem Drosselkanal 62 ist ein im Drehbetätigungsglied 27 verstellbar gelagertes Drosselglied 63 zugeordnet. Dieses ist beim Ausführungsbeispiel fest mit einem zur Feineinstellungs-Drosseleinrichtung 26 gehörenden weiteren Drehbetätigungsglied 64 verbunden. Das weitere Drehbetätigungsglied 64 ist beim Ausführungsbeispiel ein Schraubglied, dessen Drehachse mit der Drehachse 32 des anderen Drehbetätigungsgliedes 27 zusammenfällt. Beim Verdrehen des weiteren Drehbetätigungsgliedes 64 führt das Drosselglied 63 in dem Drehbetätigungsglied 27 der Grobeinstellungs-Drosseleinrichtung 25 eine durch einen Doppelpfeil 65 verdeutlichte axiale Stellbewegung aus, durch die der vom Drosselkanal 62 zur Verfügung gestellte Drosselungsquerschnitt stufenlos verändert und nach Bedarf eingestellt werden kann.

Man hat somit die Möglichkeit, durch stufenweise Positionierung des Drehbetätigungsgliedes 27 der Grobeinstellungs-Drosseleinrichtung 25 eine Grobeinstellung der gewünschten Drosselungsintensität vorzunehmen und die tatsächlich gewünschte Drosselungsintensität durch entsprechendes Positionieren des Drosselgliedes 63 präzise fein zu justieren.

Das Drehbetätigungsglied 27 der Grobeinstellungs-Drosseleinrichtung 25 ragt mit einem mit der Hand ergreifbaren Handhabungsabschnitt 66 aus dem kopfseitigen Endabschnitt 7 des - Grundkörpers 5 heraus. Das weitere Drehbetätigungsglied 64 verfügt über einen weiteren Handhabungsabschnitt 67, der zweckmäßigerweise von der dem Grundkörper 5 axial entgegengesetzten Stirnseite des Drehbetätigungsgliedes 27 her zugänglich ist. Beim Ausführungsbeispiel ist das weitere Drehbetätigungsglied 64 von dieser Stirnseite her in das Drehbetätigungsglied 27 der Grobeinstellungs-Drosseleinrichtung 25 eingeschraubt und hat einen axial orientieren Schlitz 72, an dem sich ein Schraubwerkzeug ansetzen lässt, um eine Drehbetätigung des weiteren Drehbetätigungsgliedes 64 relativ zu dem Drehbetätigungsglied 27 der Grobeinstellungs-Drosseleinrichtung 25 vornehmen zu können. Auf diese Weise ist gewährleistet, dass beide Drosseleinrichtungen unabhängig voneinander einstellbar sind.

Bevorzugt ist der Verstellbereich des weiteren Drehbetätigungsgliedes 64 der Feineinstellungs-Drosseleinrichtung 26 durch geeignete Maßnahmen so beschränkt, dass maximal eine Umdrehung, also ein Drehwinkel von maximal 360° möglich ist. Beim Ausführungsbeispiel liegt der Verstellbereich zwischen 270° und 340°. Dadurch ist sehr einfach eine reproduzierbare Feineinstellung möglich. Durch miteinander korrespondierende Anzeigemittel 68, beispielsweise in Gestalt geeigneter Markierungen oder einer Skala-Zeiger-Kombination, kann die Reproduzierbarkeit der Einstellung begünstigt werden.

Beim Ausführungsbeispiel wird der maximale Verstellbereich des weiteren Drehbetätigungsgliedes 64 durch einen an letzterem angeordneten Radialvorsprung 69 erreicht, in dessen Verstellweg ein fest mit dem Drehbetätigungsglied 27 der Grobeinstellungs-Drosseleinrichtung 25 verbundener Anschlagkörper 70 liegt. Letzterer ist beim Ausführungsbeispiel stiftartig ausgebildet und in einer komplementären, sacklochartigen Aufnahmevertiefung 71 des Drehbetätigungsgliedes 27 gehalten.

Um bei der Herstellung des Drosselventils 1 die Endpositionen des Verstellbereiches des weiteren Drehbetätigungsgliedes 64 optimal vorgeben zu können, sind an dem Drehbetätigungsglied 27, in Umfangsrichtung verteilt, mehrere Aufnahmevertiefungen 71 vorhanden, wobei der Anschlagkörper 70 in die jeweils geeignete Aufnahmevertiefung 71 eingesteckt wird.

Das Drosselventil 1 kann als reines Drosselventil ausgebildet sein. Viele Anwendungen verlangen jedoch eine kombinierte Drosselungs- und Rückschlagfunktion, wobei das Ausführungsbeispiel deutlich macht, dass man solchen Anforderungen Rechnungen tragen kann, in dem man zwischen den beiden Anschlußkanälen 23a, 23b einen Umgehungskanal 74 vorsieht, der mit Rückschlagventilmitteln 75 ausgestattet ist. Auf diese Weise ergibt sich insgesamt ein sogenanntes Drosselrückschlagventil.

Die Rückschlagventilmittel 75 können wie abgebildet von einer Rückschlagmanschette gebildet sein, die so ausgestaltet ist, dass sie eine Fluidströmung vom zweiten Anschlußkanal 23b zum ersten Anschlußkanal 23a unter Umgehung der beiden Drosseleinrichtungen 25, 26 erlaubt, während sie eine Strömung in Gegenrichtung verhindert, so dass das Fluid dann gezwungen ist, die Drosseleinrichtungen 25, 26 zu passieren.

## Patentansprüche

1. Drosselventil, mit einer stufenweise zwischen verschiedenen Drosselungsstufen mit unterschiedlichen Drosselungsquerschnitten umschaltbaren Grobeinstellungs-Drosseleinrichtung (25) **dadurch gekennzeichnet, daß** das Drosselventil auch eine der Grobeinstellungs-Drosseleinrichtung (25) parallel geschalteten, hinsichtlich ihres Drosselungsquerschnittes stufenlos einstellbare Feineinstellungs-Drosseleinrichtung (26) enthält.

2. Drosselventil nach Anspruch 1, **dadurch gekennzeichnet, dass** die Querschnittsunterschiede zwischen den größenmäßig jeweils aufeinanderfolgenden Drosselungsstufen der Grobeinstellungs-Drosseleinrichtung (25) und der Einstellbereich der Feineinstellungs-Drosseleinrichtung (26) so aufeinander abgestimmt sind, dass innerhalb des erzielten Gesamt-Einstellbereiches eine stufenlose Vorgabe beliebiger Drosselungsintensitäten möglich ist.

3. Drosselventil nach Anspruch 2, **gekennzeichnet durch** eine gleichbleibend lineare Einstellcharakteristik innerhalb des Gesamteinstellbereiches.

4. Drosselventil nach einem der Ansprüche 1 bis 3, **dadurch gekennzeichnet, dass** der Einstellbereich der Feineinstellungs-Drosseleinrichtung (26) genau die Querschnittsdifferenz zwischen den größenmäßig jeweils aufeinanderfolgenden Drosselungsstufen der Grobeinstellungs-Drosseleinrichtung (25) abdeckt.

5. Drosselventil nach einem der Ansprüche 1 bis 4, **dadurch gekennzeichnet, dass** die Feineinstellungs-Drosseleinrichtung (26) für die Einstellung des Drosselungsquerschnittes ein Drehbetätigungsglied (64) aufweist, dessen Verstellbereich durch entsprechende Maßnahmen auf maximal 360° beschränkt ist, wobei der maximal mögliche Verstellbereich zweckmäßigerweise zwischen 270° und 340° liegt.

6. Drosselventil nach Anspruch 5, **dadurch gekennzeichnet, dass** das Drehbetätigungsglied (64) ein Schraubglied ist.

7. Drosselventil nach einem der Ansprüche 1 bis 6, **gekennzeichnet durch** ein Ventilgehäuse (2) mit einem ersten und einem zweiten Anschlußkanal (23a, 23b) zur Zufuhr bzw. Abfuhr eines Fluides.

8. Drosselventil nach Anspruch 7, **dadurch gekennzeichnet, dass** die Grobeinstellungs-Drosseleinrichtung (25) eine Mehrzahl von Drosseldurchgängen (45) mit unterschiedlichen Drosselungsquerschnitten aufweist, die mittels eines entsprechend positionierbaren Drehbetätigungsgliedes (27) der Grobeinstellungs-Drosseleinrichtung (25) individuell auswählbar sind, um über den jeweils ausgewählten Drosseldurchgang (45) eine fluidische Verbindung zwischen den beiden Anschlußkanälen (23a, 23b) herzustellen.

9. Drosselventil nach Anspruch 8, **dadurch gekennzeichnet, dass** das Drehbetätigungsglied (27) der Grobeinstellungs-Drosseleinrichtung (25) in den ausgewählten Positionen durch Verrastung positionierbar ist.

10. Drosselventil nach Anspruch 8 oder 9, **dadurch gekennzeichnet, dass** sämtliche Drosseldurchgänge (45) einenends mit dem zweiten Anschlußkanal (23b) kommunizieren und andernends zu einer Überströmkammer (37) ausmünden, zu der auch der erste Anschlußkanal (23a) ausmündet, wobei das Drehbetätigungsglied (27) der Grobeinstellungs-Drosseleinrichtung (25) einen Überströmkanal (53) definiert, der zum einen ständig mit der Mündung (42) des ersten Anschlußkanals (23a) verbunden ist und zum andern durch entsprechende Positionierung des Drehbetätigungsgliedes mit der Mündung des ausgewählten Drosseldurchganges (45) verbindbar ist.

11. Drosselventil nach Anspruch 10, **dadurch gekennzeichnet, dass** die Mündungen an dem sich rechtwinkelig zur Drehachse (32) des Drehbetätigungsgliedes (27) erstreckenden Boden (36) der Überströmkammer (37) vorgesehen sind, an dem das Drehbetätigungsglied (27) der Grobeinstellungs-Drosseleinrichtung (25) mit dem Rand einer den Überströmkanal (53) begrenzenden Vertiefung (51) anliegt, wobei dieser Rand beim Verdrehen des Drehbetätigungsgliedes (27) auf dem Boden (36) der Überströmkammer (37) gleiten kann.

12. Drosselventil nach Anspruch 11, **dadurch gekennzeichnet, dass** die Mündung des ersten Anschlußkanals (23a) auf der Drehachse (32) des Drehbetätigungsgliedes (27) der Grobeinstellungs-Drosseleinrichtung (25) liegt, wobei die Mündungen der Drosseldurchgänge (45) auf einem Kreisbogen (43) liegen, dessen Zentrum ebenfalls auf der Drehachse (32) liegt.

13. Drosselventil nach einem der Ansprüche 10 bis 12, **dadurch gekennzeichnet, dass** die Drosseldurchgänge (45) an einer in der Überströmkammer (37) plazierten gelochten Drosselscheibe (35) vorgesehen sind.

14. Drosselventil nach Anspruch 13, **dadurch gekennzeichnet, dass** die Drosselscheibe (35) einen mehrschichtigen Aufbau hat, mit einer weichelastischen Dichtungsschicht (52) an der dem Drehbetätigungsglied (27) abgewandten Seite und einer aus steiferem Material bestehenden, jedoch anschmiegsamen Drosselungsschicht (48) an der dem Drehbetätigungsglied (27) zugewandten Seite.

15. Drosselventil nach einem der Ansprüche 1 bis 14, **dadurch gekennzeichnet, dass** die Großeinstellungs-Drosseleinrichtung (25) ein Drehbetätigungsglied (27) für die Einstellung der Drosselungsstufen aufweist, wobei die Feineinstellungs-Drosseleinrichtung (26) am Drehbetätigungsglied (27) der Grobeinstellungs-Drosseleinrichtung (25) vorgesehen ist und zweckmäßigerweise in dieses Drehbetätigungsglied (27) integriert ist.

16. Drosselventil nach Anspruch 15, **dadurch gekennzeichnet, dass** die Feineinstellungs-Drosseleinrichtung (26) einen im Drehbetätigungsglied (27) der Grobeinstellungs-Drosseleinrichtung (25) verlaufenden, zum einen mit dem ersten Anschlußkanal (23a) und zum anderen mit dem zweiten Anschlußkanal (23b) verbundenen Drosselkanal (62) aufweist, dem ein an diesem Drehbetätigungsglied (27) verstellbar gelagertes, zur Feineinstellung der Drosselungsintensität dienendes Drosselglied (63) zugeordnet ist.

17. Drosselventil nach Anspruch 16 in Verbindung mit Anspruch 10, **dadurch gekennzeichnet, dass** der Drosselkanal (62) einenends mit dem Überströmkanal (53) und andernends, außerhalb des Überströmkanals (53), mit der Überströmkammer (37) kommuniziert, derart, dass das die Feineinstellungs-Drosseleinrichtung (26) durchströmende Fluid durch die nicht ausgewählten Drosseldurchgänge (45) hindurchströmen kann.

18. Drosselventil nach einem der Ansprüche 7 bis 17, **dadurch gekennzeichnet, dass** das Ventilgehäuse (2) einen mit den beiden Drosseleinrichtungen (25, 26) ausgestatteten Grundkörper (5) und ein an dem Grundkörper (5) drehbar gelagertes Schwenkteil (13) aufweist, wobei der eine Anschlußkanal (23a) am Grundkörper (5) und der andere Anschlußkanal (23b) am Schwenkteil (13) vorgesehen sind.

19. Drosselventil nach einem der Ansprüche 7 bis 18, **gekennzeichnet durch** mindestens einen zwischen den beiden Anschlußkanälen (23a, 23b) verlaufenden Umgehungskanal (74) mit zugeordneten Rückschlagventilmitteln (75).

## Claims

1. Restrictor valve with a coarse-adjustment restriction device (25) switchable in steps between various restriction steps with differing restriction cross-sections, **characterised in that** the restrictor valve also contains a fine-adjustment restriction device (26), connected in parallel with the coarse-adjustment restriction device (25) and capable of stepless adjustment of its restriction cross-section.

2. Restrictor valve according to claim 1, **characterised in that** the differences in cross-section between the restriction steps of the coarse-adjustment restriction device (25), consecutive in order of size, and the setting range of the fine-adjustment restriction device (26) are so coordinated that stepless presetting of any desired intensity of restriction is possible within the overall setting range obtained.

3. Restrictor valve according to claim 2, **characterised by** a constant linear setting characteristic within the overall setting range.

4. Restrictor valve according to any of claims 1 to 3, **characterised in that** the setting range of the fine-adjustment restriction device (26) precisely covers the difference in cross-section between the restriction steps of the coarse-adjustment restriction device (25) which are consecutive in order of size.

5. Restrictor valve according to any of claims 1 to 4, **characterised in that**, for setting of the restriction cross-section, the fine-adjustment restriction device (26) has a rotary actuating element (64) with a range of adjustment restricted by suitable measures to a maximum of 360°, while the maximum possible range of adjustment lies expediently between 270° and 340°.

6. Restrictor valve according to claim 5, **characterised in that** the rotary actuating element (64) is a screwed element.

7. Restrictor valve according to any of claims 1 to 6, **characterised by** a valve casing (2) with a first and second connecting passage (23a, 23b) for the supply and removal of a fluid.

8. Restrictor valve according to claim 7, **characterised in that** the coarse-adjustment restriction device (25) has a multiplicity of restrictor passages (45) with different restriction cross-sections, which may be individually selected by means of a suitably positionable rotary actuating element (27) of the coarse-adjustment restriction device (25), in order to create a fluidic connection between the two connecting passages (23a, 23b) via the respectively selected restrictor passage (45).

9. Restrictor valve according to claim 8, **characterised in that** the rotary actuating element (27) of the coarse-adjustment restriction device (25) may be located in the selected positions by locking.

10. Restrictor valve according to claim 8 or 9, **characterised in that** all restrictor passages (45) communicate at one end with the second connecting passage (23b) and lead at the other end to an overflow chamber (37) to which the first connecting passage (23a) also leads, while the rotary actuating element (27) of the coarse-adjustment restriction device (25) defines an overflow passage (53), which on the one hand is constantly connected to the mouth (42) of the first connecting passage (23a), and on the other hand may be connected by suitable positioning of the rotary actuating element to the mouth of the selected restrictor passage (45).

11. Restrictor valve according to claim 10, **characterised in that** the mouths are provided at the base (36) of the overflow chamber (37) extending at right-angles to the axis of rotation (32) of the rotary actuating element (27), and at which the rotary actuating element (27) of the coarse-adjustment restriction device (25) fits up against the edge of a recess (51) bounding the overflow passage (53), wherein this edge is able to slide on the base (36) of the overflow chamber (37) during rotation of the rotary actuating element (27).

12. Restrictor valve according to claim 11, **characterised in that** the mouth of the first connecting passage (23a) lies on the axis of rotation (32) of the rotary actuating element (27) of the coarse-adjustment restriction device (25), while the mouths of the restrictor passages (45) lie on a circular arc (43), the centre of which also lies on the axis of rotation (32).

13. Restrictor valve according to any of claims 10 to 12, **characterised in that** the restrictor passages (45) are provided on a perforated restrictor disc (35) placed in the overflow chamber (37).

14. Restrictor valve according to claim 13, **characterised in that** the restrictor disc (35) has a multi-layered structure, with a flexible elastic seal layer (52) on the side facing away from the rotary actuating element (27), and a restrictor layer (48) made of material which is more rigid but still moulding to shape on the side facing the rotary actuating element (27).

15. Restrictor valve according to any of claims 1 to 14, **characterised in that** the coarse-adjustment restriction device (25) has a rotary actuating element (27) for setting of the restriction steps, wherein the fine-adjustment restriction device (26) is provided on the rotary actuating element (27) of the coarse-adjustment restriction device (25) and is expediently integrated with this rotary actuating element (27).

16. Restrictor valve according to claim 15, **characterised in that** the fine-adjustment restriction device (26) has a restrictor passage (62), running in the rotary actuating element (27) of the coarse-adjustment restriction device (25), which is connected on the one hand to the first connecting passage (23a) and on the other hand to the second connecting passage (23b), and to which is assigned a restrictor element (63) adjustably mounted on this rotary actuating element (27) and serving for fine adjustment of the intensity of restriction.

17. Restrictor valve according to claim 16 in combination with claim 10, **characterised in that** the restrictor passage (62) communicates at one end with the overflow passage (53) and at the other end, outside the overflow passage (53), with the overflow chamber (37) in such a way that the fluid flowing through the fine-adjustment restriction device (26) is able to flow through the non-selected restrictor passages (45).

18. Restrictor valve according to any of claims 7 to 17, **characterised in that** the valve casing (2) has a base body (5) equipped with the two restriction devices (25, 26) and a swivel section (13) pivotably mounted on the base body (5), wherein one connecting passage (23a) is provided on the base body (5) and the other connecting passage (23b) on the swivel section (13).

19. Restrictor valve according to any of claims 7 to 18, **characterised by** one or more bypass channels (74) with assigned non-return valve means (75), running between the two connecting passage (23a, 23b).

## Revendications

1. Soupape d'étranglement avec un dispositif d'étranglement à réglage grossier (25) qui peut commuter de façon discontinue entre différents degrés d'étranglement de sections d'étranglement différentes, **caractérisée en ce que** la soupape d'étranglement contient aussi un dispositif d'étranglement à réglage fin (26) monté en parallèle au dispositif d'étranglement à réglage grossier (25) et réglable en continu en ce qui concerne sa section d'étranglement.

2. Soupape d'étranglement selon la revendication 1, **caractérisée en ce que** les différences de taille de la section transversale des degrés d'étranglement successifs du dispositif d'étranglement à réglage grossier (25), et la plage de réglage du dispositif d'étranglement à réglage fin (26), sont adaptées les unes à l'autre de manière qu'à l'intérieur de la plage totale de réglage obtenue, il soit possible de sélectionner en continu des intensités d'étranglement quelconques.

3. Soupape d'étranglement selon la revendication 2, **caractérisée par** une caractéristique de réglage linéaire constante à l'intérieur de la plage totale de réglage.

4. Soupape d'étranglement selon l'une des revendications 1 à 3, **caractérisée en ce que** la plage de réglage du dispositif d'étranglement à réglage fin (26) couvre exactement la différence de section entre les degrés d'étranglement successifs de par leur taille du dispositif d'étranglement à réglage grossier (25).

5. Soupape d'étranglement selon l'une des revendications 1 à 4, **caractérisée en ce que** le dispositif d'étranglement à réglage fin (26) comporte, pour le réglage de la section d'étranglement, un organe d'actionnement tournant (64) dont la plage de réglage est limitée à 360° au maximum par des moyens appropriés, la plage de réglage maximale possible se situant avantageusement entre 270° et 340°.

6. Soupape d'étranglement selon la revendication 5, **caractérisée en ce que** l'organe d'actionnement tournant (64) est un organe à vis.

7. Soupape d'étranglement selon l'une des revendications 1 à 6, **caractérisée par** un boîtier de soupape (2) avec un premier canal de raccordement et un deuxième canal de raccordement (23a, 23b), respectivement pour l'arrivée et le départ d'un fluide.

8. Soupape d'étranglement selon la revendication 7, **caractérisée en ce que** le dispositif d'étranglement à réglage grossier (25) comporte une pluralité de passages d'étranglement (45) de sections d'étranglement différentes, qui peuvent être sélectionnés individuellement au moyen d'un organe d'actionnement tournant (27), pouvant être positionné de façon correspondante, du dispositif d'étranglement à réglage grossier (25), afin de réaliser, à travers le passage d'étranglement (45) sélectionné, une liaison fluidique entre les deux canaux de raccordement (23a, 23b).

9. Soupape d'étranglement selon la revendication 8, **caractérisée en ce que** l'organe d'actionnement tournant (27) du dispositif d'étranglement à réglage grossier (25) peut être positionné par encliquetage dans les positions sélectionnées.

10. Soupape d'étranglement selon la revendication 8 ou 9, **caractérisée en ce que** tous les passages d'étranglement (45) communiquent à une extrémité avec le deuxième canal de raccordement (23b) et débouchent à l'autre extrémité vers une chambre de trop-plein (37) vers laquelle débouche aussi le premier canal de raccordement (23a), l'organe d'actionnement tournant (27) du dispositif d'étranglement à réglage grossier (25) définissant un canal de trop-plein (53) qui est relié d'une part en permanence à l'embouchure (42) du premier canal de raccordement (23a) et qui peut être relié d'autre part, par positionnement correspondant de l'organe d'actionnement tournant, à l'embouchure du passage d'étranglement (45) sélectionné.

11. Soupape d'étranglement selon la revendication 10, **caractérisée en ce que** les embouchures sont prévues sur le fond (36), s'étendant à angle droit par rapport à l'axe de rotation (32) de l'organe d'actionnement tournant (27), de la chambre de trop-plein (37), contre lequel l'organe d'actionnement tournant (27) du dispositif d'étranglement à réglage grossier (25) s'applique par le bord d'un renfoncement (51) délimitant le canal de trop-plein (53), ce bord pouvant glisser sur le fond (36) de la chambre de trop-plein (37), pendant la rotation de l'organe d'actionnement tournant (27).

12. Soupape d'étranglement selon la revendication 11, **caractérisée en ce que** l'embouchure du premier canal de raccordement (23a) se situe sur l'axe de rotation (32) de l'organe d'actionnement tournant (27) du dispositif d'étranglement à réglage grossier (25), les embouchures des passages d'étranglement (45) se situant sur un arc de cercle (43) dont le centre se situe également sur l'axe de rotation (32).

13. Soupape d'étranglement selon l'une des revendications 10 à 12, **caractérisée en ce que** les passages d'étranglement (45) sont prévus sur un disque d'étranglement perforé (35) placé dans la chambre de trop-plein (37).

14. Soupape d'étranglement selon la revendication 13, **caractérisée en ce que** le disque d'étranglement (35) présente une construction à plusieurs couches avec une couche d'étanchéité (52) élastique souple sur le côté tourné à l'opposé de l'organe d'actionnement tournant (27), et une couche d'étranglement (48) constituée d'une matière plus rigide, néanmoins souple, sur le côté tourné vers l'organe d'actionnement tournant (27).

15. Soupape d'étranglement selon l'une des revendications 1 à 14, **caractérisée en ce que** le dispositif d'étranglement à réglage grossier (25) comporte un organe d'actionnement tournant (27) pour le réglage des degrés d'étranglement, le dispositif d'étranglement à réglage fin (26) étant prévu sur l'organe d'actionnement tournant (27) du dispositif d'étranglement à réglage grossier (25), et étant intégré avantageusement dans cet organe d'actionnement tournant (27).

16. Soupape d'étranglement selon la revendication 15, **caractérisée en ce que** le dispositif d'étranglement à réglage fin (26) comporte un canal d'étranglement (62) s'étendant dans l'organe d'actionnement tournant (27) du dispositif d'étranglement à réglage grossier (25), et relié d'une part au premier canal de raccordement (23a) et d'autre part au deuxième canal de raccord (23b), auquel canal d'étranglement est associé un organe d'étranglement (63) monté réglable sur cet organe d'actionnement tournant (27) et servant au réglage fin de l'intensité d'étranglement.

17. Soupape d'étranglement selon la revendication 16, en combinaison avec la revendication 10, **caractérisée en ce que** le canal d'étranglement (62) communique à une extrémité avec le canal de trop-plein (53) et à l'autre extrémité, à l'extérieur du canal de trop-plein (53), avec la chambre de trop-plein (37), de manière que le fluide qui circule à travers le dispositif d'étranglement à réglage fin (26), ne puisse circuler à travers les passages d'étranglement (45) non sélectionnés.

18. Soupape d'étranglement selon l'une des revendications 7 à 17, **caractérisée en ce que** le boîtier de soupape (2) comporte un corps de base (5) équipé des deux dispositifs d'étranglement (25, 26) et un élément pivotant (13) monté tournant sur le corps de base (5), un canal de raccordement (23a) étant prévu sur le corps de base (5) et l'autre canal de raccordement (23b) sur l'élément pivotant (13).

19. Soupape d'étranglement selon l'une des revendications 7 à 18, **caractérisée par** au moins un canal de dérivation (74) s'étendant entre les deux canaux de raccordement (23a, 23b), avec des moyens à clapet de non-retour (75) associés.
